(19) Europäisches Patentamt / European Patent Office / Office européen des brevets

(11) **EP 4 254 572 A1**

(12) **EUROPEAN PATENT APPLICATION**
published in accordance with Art. 153(4) EPC

(43) Date of publication:
**04.10.2023 Bulletin 2023/40**

(21) Application number: **21898751.9**

(22) Date of filing: **30.11.2021**

(51) International Patent Classification (IPC):
**H01M 8/18** (2006.01)

(52) Cooperative Patent Classification (CPC):
**H01M 8/18; Y02E 60/50**

(86) International application number:
**PCT/KR2021/017901**

(87) International publication number:
**WO 2022/114926 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020 KR 20200163956**

(71) Applicant: **Lotte Chemical Corporation**
**Seoul, 05551 (KR)**

(72) Inventors:
• **CHOI, Eun Mi**
  **Daejeon 34110 (KR)**
• **KIM, Dae Sik**
  **Daejeon 34110 (KR)**
• **LEE, Jae Hyuk**
  **Daejeon 34110 (KR)**
• **JANG, Hyeon Seok**
  **Daejeon 34110 (KR)**

(74) Representative: **Germain Maureau**
**12, rue Boileau**
**69006 Lyon (FR)**

(54) **METHOD FOR PRODUCING ELECTROLYTE FOR VANADIUM REDOX FLOW BATTERY**

(57)   The present invention relates to a method for producing an electrolyte for a vanadium redox flow battery, the method comprising: (a) a step for producing a first vanadium ion solution; (b) a step in which the first vanadium ion solution flows into a first positive electrode electrolyte tank and a first negative electrode electrolyte tank to which a first stack including a positive electrode, a separator, and a negative electrode is connected; (c) a step in which the first vanadium ion solution that has flowed into the positive electrode from the first positive electrode electrolyte tank is oxidized to generate a second vanadium ion solution, and the first vanadium ion solution that has flowed into the negative electrode from the first negative electrode electrolyte tank is reduced to generate a third vanadium ion solution; and (d) a step in which the second vanadium ion solution generated in the positive electrode is reduced into a fourth vanadium ion solution by reacting with a reducing agent.

【FIG.1】

EP 4 254 572 A1

**Description**

[Technical Field]

The present invention relates to a method for preparing an electrolyte for a vanadium redox flow battery.

[Background Art]

While existing power generation systems, such as thermal power generation using fossil fuels, which cause a large amount of greenhouse gas and environmental pollution problems, and nuclear power generation, which have problems with the stability of the facility itself or waste disposal, reveal various limitations, research on the development of energy that is more eco-friendly and has higher efficiency and the development of a power supply system using the same has been greatly increased. In particular, since power storage technology allows renewable energy, which is greatly affected by external conditions, to be used more diversely and widely and can further increase the efficiency of power use, developments in these technical fields are being concentrated, and interest in and research and development of secondary batteries among them are greatly increasing.

With these requests, the development of redox flow batteries (RFBs), which are most industrially close to the ESS market, along with lithium ion batteries, is accelerating.

The redox flow batteries refer to oxidation/reduction batteries capable of directly converting the chemical energy of an active material into electrical energy, and are an energy storage system capable of converting it into high-quality power by storing new renewable energy with high output variability depending on the external environment, such as solar light and wind power. Specifically, charging and discharging proceed as an electrolyte containing an active material causing an oxidation/reduction reaction circulates between an electrode and a storage tank in the redox flow batteries.

In addition, the types of the redox flow batteries vary depending on the active material used in such an electrolyte. Since a vanadium redox flow battery, a zinc/bromine redox flow battery, etc. among them are known, and the electrolyte accounts for the highest price share among battery element parts in the vanadium redox flow battery, lowering the price of electrolyte is essential to securing price competitiveness of vanadium redox flow batteries.

Meanwhile, the currently used vanadium redox flow battery system is operated by injecting an electrolyte containing a 3.5 valent (mixed equivalent ratio of $V^{4+}$ and $V^{3+}$) vanadium ion solution into the cathode and anode of the cell, and thus a number of developments are being made on a method for preparing an electrolyte containing a commercially low-cost, high-purity 3.5 valent vanadium ionic solution.

Such an electrolyte may be prepared using electrolysis or a metal reducing agent by using an electrolyte containing a pentavalent vanadium ion solution.

Specifically, in Patent Document 1, an electrolyte was prepared through three electrolytic reactions using expensive vanadium sulfate oxide ($VOSO_4$) as a starting material for preparing an electrolyte, but there have been problems in that this is a complicated preparation process, and the concentration of vanadium and the concentration of sulfuric acid change each time the electrolysis process proceeds.

In addition, Patent Document 2 discloses a method for preparing a vanadium electrolyte using slightly soluble $V_2O_5$ and a stack, and zinc metal (Zn) was used as a reducing agent for oxidation number control. At this time, the zinc metal causes a rapid reduction reaction, but remains in an ionic state in the electrolyte, and thus has a disadvantage in that a side reaction may be caused in the stack. In addition, during the reduction reaction, by-products such as $CO_2$ gas may be generated, and if they are not removed, there is a problem in that the life of the stack and the quality of the electrolyte to be prepared may also deteriorate.

Meanwhile, when preparing an electrolyte using electrolysis, an electrolyte containing a tetravalent vanadium ion solution is injected into a vanadium redox flow battery to undergo a charging process. That is, when the electrolyte containing a tetravalent vanadium ion solution is injected into the cathode and anode of the vanadium redox flow battery and charged, it is converted to pentavalent in the cathode, and it is converted to trivalent in the anode. A 3.5 valent electrolyte may be prepared by mixing the obtained trivalent and tetravalent amounts in equivalent amounts. However, in the case of using the electrolytic method as described above, an electrolyte containing an excessive amount of surplus pentavalent vanadium ions is produced in preparing a 3.5 valent electrolyte, resulting in a problem of wasting 1/3 of the total electrolyte, and there is a problem in that stack installation, power consumption, operation and maintenance costs occur, causing an increase in electrolyte preparation costs.

Therefore, there is a need for research on a method for preparing an electrolyte for a vanadium redox flow battery capable of solving the above-described problems.

[Prior Art Documents]

[Patent Documents]

(Patent Document 1) Korean Patent Publication No. 10-1415538
(Patent Document 2) Korean Patent Publication No. 10-1130575

[Disclosure]

[Technical Problem]

The present invention provides a method for preparing an electrolyte for a vanadium redox flow battery, the method which can continuously prepare an electrolyte by reusing a surplus pentavalent vanadium ion solution, can lower the preparation cost of the electrolyte by not leaving a surplus electrolyte, and can improve the lifespan of a stack and the quality of an electrolyte prepared by preventing side reactions and gas generation due to a surplus reducing agent in the solution during the preparation.

[Technical Solution]

One embodiment of the present invention provides a method for preparing an electrolyte for a vanadium redox flow battery, the method including the steps of:

(a) preparing a first vanadium ion solution;
(b) flowing the first vanadium ion solution into a first cathode electrolyte tank and a first anode electrolyte tank to which a first stack containing a cathode, a separator, and an anode is connected;
(c) flowing the first vanadium ion solution from the first cathode electrolyte tank to the cathode and then oxidizing it to produce a second vanadium ion solution, and flowing the first vanadium ion solution from the first anode electrolyte tank to the anode and then reducing it to produce a third vanadium ion solution; and
(d) reacting the second vanadium ion solution generated at the cathode with a reducing agent to reduce it to a fourth vanadium ion solution.

[Advantageous Effects]

The method for preparing an electrolyte for a vanadium redox flow battery according to the present invention can continuously prepare the electrolyte by reducing and reusing the surplus vanadium ion solution generated at the cathode of the stack in a reduction reactor, and does not allow a surplus electrolyte to remain, thereby enabling preparation cost of the electrolyte to be reduced.
In addition, when the reducing agent is used in a separate reduction reactor, side reactions caused by the reducing agent and gas in the electrolyte can be reduced by removing the gas present and generated in the reduction reactor, thereby having the effects capable of improving the lifespan of the stack and the quality of the electrolyte to be prepared.

[Description of Drawings]

FIG. 1 is a schematic diagram showing the flow of a method for preparing an electrolyte for a vanadium redox flow battery according to one embodiment of the present invention.
FIG. 2 is a charge/discharge comparison graph according to Experimental Example 2.

[Modes of the Invention]

In this specification, when a part is said to "include" a certain component, it means that it may further include other components without excluding other components unless specifically stated otherwise.
Hereinafter, the present invention will be described in detail.
One embodiment of the present invention provides a method for preparing an electrolyte for a vanadium redox flow battery, the method including the steps of:

(a) preparing a first vanadium ion solution;
(b) flowing the first vanadium ion solution into a first cathode electrolyte tank and a first anode electrolyte tank to which a first stack containing a cathode, a separator, and an anode is connected;
(c) flowing the first vanadium ion solution from the first cathode electrolyte tank to the cathode and then oxidizing it to produce a second vanadium ion solution, and flowing the first vanadium ion solution from the first anode electrolyte tank to the anode and then reducing it to produce a third vanadium ion solution; and
(d) reacting the second vanadium ion solution generated at the cathode with a reducing agent to reduce it to a fourth vanadium ion solution.

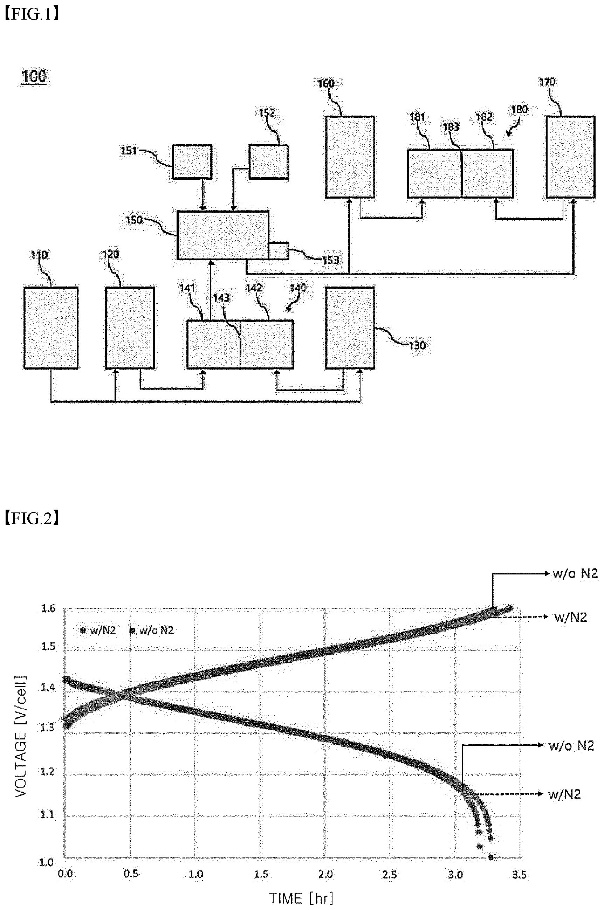

The method for preparing an electrolyte for a vanadium redox flow battery according to the present invention will be described in more detail together with a preparation apparatus 100 schematically shown to show the flow with reference to FIG. 1 below.

First, in order to prepare an electrolyte for a vanadium redox flow battery, a first vanadium ion solution, which is a starting material, is prepared.

The first vanadium ion solution may be prepared by mixing a vanadium precursor, a reducing agent, and an acidic solution. Here, the vanadium precursor may be one or more selected from the group consisting of $V_2O_5$, $VOSO_4$, $NH_4VO_3$, and $V_2O_4$.

The acidic solution is preferably one or more selected from the group consisting of sulfuric acid, hydrochloric acid, nitric acid, and phosphoric acid, but any strong acid may be used without being limited thereto.

The reducing agent is preferably one or more selected from the group consisting of formic acid, formaldehyde, methanol, ethanol, oxalic acid, and ammonium hydroxide, but any substance that does not leave impurities other than gas form may be used without being limited thereto.

Since a preparation method of such a first vanadium ion solution has conventionally been well known, a detailed description thereof is omitted in this specification.

The first vanadium ion solution prepared as described above may be a tetravalent to 4.5 valent vanadium ion solution. Here, the 'tetravalent to 4.5 valent vanadium ion solution' means a range encompassing intermediate oxidation numbers of the oxidation numbers. That is, it may not only become tetravalent and 4.5 valent, but also become 4.1 valent and 4.2 valent. More specifically, the first vanadium ion solution may be a tetravalent vanadium ion solution.

The first vanadium ion solution prepared in this way may be prepared and stored in the reaction tank 110.

The first vanadium ion solution stored in such a reaction tank 100 flows into a first cathode electrolyte tank 120 and a first anode electrolyte tank 130 to which a first stack 140 including a cathode 141, a separator 143, and an anode 142 is connected afterward by transfer equipment including a pump.

Here, the first cathode electrolyte tank 120 stores the first vanadium ion solution as the cathode electrolyte, and the first anode electrolyte tank 130 stores the first vanadium ion solution as the anode electrolyte.

The first vanadium ion solution stored in each of the first electrolyte tanks 120 and 130 flows into the cathode 141 and the anode 142, respectively, of the first stack 140 including the cathode 141, the separator 143, and the anode 142 by transfer equipment including a valve and a pump.

The separator 143 serves to transfer hydrogen ions and block vanadium ions of the cathode 141 and the anode 142 from moving to the counter electrode. It is preferable for the separator 143 performing the above-described role to use an ion conductive separator.

An electrolytic reaction according to the flow of electricity occurs in the cathode 141 and the anode 142. That is, in the cathode 141, vanadium in the first vanadium ion solution is oxidized to produce a second vanadium ion solution, and in the anode 142, vanadium in the first vanadium ion solution is reduced to produce a third vanadium ion solution. More specifically, when charging is performed after the first vanadium ion solution flows into the first stack 141, an oxidation/reduction reaction in which vanadium loses electrons at the cathode and gains electrons at the anode proceeds.

Accordingly, the second vanadium ion solution may be a pentavalent vanadium ion solution, and the third vanadium ion solution may be a trivalent to 3.5 valent vanadium ion solution. Here, the 'trivalent to 3.5 valent vanadium ion solution' means a range encompassing intermediate oxidation numbers of the oxidation numbers. That is, it may not only become trivalent and 3.5 valent, but also become 3.1 valent and 3.2 valent. More specifically, the third vanadium ion solution may be a trivalent vanadium ion solution.

At this time, the second vanadium ion solution, which is the pentavalent vanadium ion solution generated at the cathode 141, is substantially a surplus vanadium ion solution, and there has conventionally been a problem in that the electrolyte solution was inevitably wasted as much as such a surplus pentavalent vanadium ion solution, and thus the preparation cost of the electrolyte increased.

However, according to the present invention, the preparation cost may be reduced by reusing such a pentavalent vanadium ion solution again.

Specifically, according to the method for preparing an electrolyte solution for a vanadium redox flow battery of the present invention, the second vanadium ion solution generated at the cathode 141 reacts with a reducing agent and is reduced to a fourth vanadium ion solution.

Here, although the drawing shows the reduction reactor 150, and the reaction tank 110 for preparing and storing the first vanadium ion solution as separate configurations, they may be the same configuration. That is, the reaction tank 110 may be used as the reduction reactor 150.

At this time, the reducing agent may be inputted by a reducing agent input unit 151 to reduce the second vanadium ion solution to the fourth vanadium ion solution.

Accordingly, the fourth vanadium ion solution may be a tetravalent to 4.5 valent vanadium ion solution. Here, the 'tetravalent to 4.5 valent vanadium ion solution' means a range encompassing intermediate oxidation numbers of the oxidation numbers. That is, it may not only become tetravalent and 4.5 valent, but also become 4.1 valent and 4.2 valent.

Here, the reducing agent may be one or more selected from the group consisting of oxalic acid, hydrazine monohydrate, ethanol, methanol, and formic acid, and specifically, may be oxalic acid.

At this time, the reducing agent may be inputted in an amount corresponding to the molar ratio thereof by measuring the concentration of pentavalent vanadium ions in the second vanadium ion solution. That is, the reducing agent may be inputted as much as the number of moles of the pentavalent vanadium ions. Therefore, more specifically, the fourth vanadium ion solution may be a tetravalent vanadium ion solution.

Otherwise, if the reducing agent is inputted in a number of moles less than the number of moles of the pentavalent vanadium ions, since many pentavalent vanadium ions remain, there are problems in that the electrolyte reusability rate decreases, the capacity decreases, the efficiency decreases as a result. If the reducing agent is too much contained, the remaining reducing agent lowers the purity of the fourth vanadium ion solution, and when the reducing agent is reused thereafter, it reacts with the pentavalent vanadium ions to cause a side reaction inside the stack so that the performance and lifespan of the stack may deteriorate, which is not desirable.

Therefore, the concentration of the pentavalent vanadium ion in the second vanadium ion solution is measured so that the reducing agent may be inputted accordingly by the reducing agent input unit 151.

For example, the pentavalent vanadium ions and oxalic acid in the second vanadium ion solution may be inputted at a molar ratio of 1:1.

In addition, this reduction may be performed until the concentration of the pentavalent vanadium ions in the reduction reactor is 0.01 M or less, and at this time, the reduction reaction may be performed in a temperature range of 50°C to 100°C for 1 hour to 6 hours. Specifically, it may be performed in a temperature range of 50°C to 70°C for 1 hour to 3 hours.

The reduction reaction temperature or time is not limited as long as the reduction reaction is performed until the concentration of pentavalent vanadium ions is 0.01 M or less, but when examining side reactions, the efficiency of manufacturing time, etc., it is more preferable to perform it within the above-described range.

In addition, according to the present invention, when the second vanadium ion solution is reduced to the fourth vanadium ion solution, as an inert gas is supplied from an inert gas supply unit 152 in order to remove gas that is generated, the reduction reaction may be performed in the presence of the inert gas.

At this time, the inert gas may be supplied until the reduction reaction is completed, and equally to the reduction reaction, the inert gas may be supplied until the concentration of the pentavalent vanadium ions is 0.01M or less.

Although it is not limited thereto, the inert gas may be one or more selected from the group consisting of nitrogen, argon, and helium, and specifically, nitrogen or argon, and more specifically, nitrogen.

In this way, gas such as $CO_2$ present in the fourth vanadium ion solution from the supply of the inert gas may be removed through a gas outlet 153.

Furthermore, thereafter, the prepared fourth vanadium ion solution may flow into a second cathode electrolyte tank 160 and a second anode electrolyte tank 170 to which a second stack 180 including a cathode 181, a separator 183, and an anode 182 is connected by transfer equipment including a pump, and may be reused.

Here, although the second stack 180 and the first stack 140, the second cathode electrolyte tank 160 and the first cathode electrolyte tank 120, the second anode electrolyte tank 170 and the first anode electrolyte tank 130 are shown as separate configurations in the drawing, they may be the same configuration. In the case of the same configuration, when the fourth vanadium ion solution is supplied from the reduction reactor 150, the trivalent to 3.5 valent vanadium ion solution received from the anode in the previous reaction and stored in the anode electrolyte tank 130 may be in a state in which it is removed from the first stack.

Meanwhile, since the fourth vanadium ion solution flown into the second cathode electrolyte tank 150 and the second anode electrolyte tank 170 may be reused by repeating the process of the steps (a) to (d), and thus the electrolyte may be continuously prepared without waste of the pentavalent vanadium ion solution, the efficiency may be increased while lowering the preparation cost.

In addition, when the reduction reaction is performed in a separate reduction reactor 150 as described above, an electrolyte solution may be prepared without by-products by easily adjusting the input amount of the reducing agent and effectively removing gases generated according to the reduction.

Hereinafter, Examples will be described in detail to explain the present invention in detail. However, embodiments according to the present invention can be modified in various different forms, and the scope of the present invention is not construed as being limited to Examples described below. The embodiments of this specification are provided to more completely explain the present invention to those skilled in the art.

**[Preparation Example]**

**Preparation of First Vanadium Ion Solution**

After injecting 0.8 mol of oxalic acid into 1 L of a 5M sulfuric acid solution and completely dissolving it at about 55 to 60°C until it became transparent, the reduction reaction was proceeded step by step while inputting 0.8 mol vanadium pentoxide ($V_2O_5$) having a purity of 98% or more in small amounts step by step. After completion of the reaction, residual by-products were removed through filtration under reduced pressure to prepare a first vanadium ion solution ($V^{4+}$ vanadium ion solution).

**[Example 1]**

The first vanadium ion solution prepared in Preparation Example above was injected into each of the cathode electrolyte tank and the anode electrolyte tank connected to the stack including the cathode, the separator, and the anode, and a charging step was performed up to SOC 50 at a current density of 50 mA/cm$^2$.

After the charging was completed, a second vanadium ion solution produced at the anode was moved to the reduction reactor, and the molar concentration of pentavalent vanadium ions was measured.

Here, the molar concentration was obtained by a redox titration method, and 0.2N KMnO$_4$ was used as the titrant.

Oxalic acid was used as a reducing agent, and the oxalic acid was inputted into the reduction reactor so that the molar ratio of the pentavalent vanadium ions to the reducing agent oxalic acid was 1:1, and then the reduction reaction was performed at 65 to 70°C for 2 hours.

In addition, in order to rapidly remove CO$_2$ gas produced as a by-product when performing the reduction reaction, nitrogen gas was supplied through a nitrogen gas supply device connected to the reduction reactor until the concentration of the pentavalent vanadium ions in the reduction reactor was 0.01M or less.

A fourth vanadium ion solution ($V^{4+}$ vanadium ion solution) in which the reduction reaction was completed was obtained.

The fourth vanadium ion solution in which the reduction reaction was completed was injected into each of the cathode electrolyte tank and the anode electrolyte tank connected to the stack including the cathode, the separator, and the anode, a charging step was performed up to SOC 50 at a current density of 50 mA/cm$^2$, and a vanadium ion solution produced at the anode was obtained.

**[Comparative Example 1]**

In Example 1, the vanadium ion solution produced at the anode was prepared after the first charge was completed.

**[Example 2]**

A fourth vanadium ion solution was obtained from the reduction reactor by performing the reduction reaction in the same manner as in Example 1 except that nitrogen gas was not supplied when performing the reduction reaction, the fourth vanadium ion solution was injected into each of the cathode electrolyte tank and the anode electrolyte tank connected to the stack including the cathode, the separator, and the anode, and a charging step was performed up to SOC 50 at a current density of 50 mA/cm$^2$, and a vanadium ion solution produced at the anode was obtained.

**[Experimental Example 1]**

In order to check the performance of the vanadium ion solutions prepared in Example 1 and Comparative Example 1 above, the vanadium ion solutions were put in the cell having the following configuration, the characteristic efficiencies (energy, voltage, current efficiency) at the 100th cycle of the vanadium redox flow batteries containing the prepared electrolytes were compared, and the results are shown in Table 1 below.

[Cell Configuration]

Electrode: SGL (GFD 3)
Separator: Nafion 117
Reaction area: 130 cm$^2$

[Evaluation conditions]

Current: 50 mA/cm$^2$
Voltage: 1.0 to 1.6 V (/cell)

$$*\text{Energy efficiency (EE)} = [\text{Discharge energy (Whr)} / \text{Charge energy (Whr)}] \times 100$$

$$*\text{Voltage efficiency (VE)} = [\text{Energy efficiency} / \text{Current efficiency}] \times 100$$

$$*\text{Current efficiency (CE)} = [\text{Discharge capacity (Ahr)} / \text{Charge capacity (Ahr)}] \times 100$$

[Table 1]

|  | Example 1 | Comparative Example 1 |
|---|---|---|
| Energy efficiency (%) | 86.3 | 86.3 |
| Voltage efficiency (%) | 89.4 | 89.4 |
| Current efficiency (%) | 96.6 | 96.5 |

Referring to Table 1, the results show the average efficiencies after driving 100 cycles of the vanadium redox flow batteries, and even when the vanadium flow batteries are manufactured using the electrolyte of the re-reduced tetravalent vanadium ion solution as in Example 1, it can be confirmed that the cell performance is shown to be the same as that of Comparative Example 1 using the electrolyte of a new tetravalent vanadium ion solution, and it can be confirmed that the efficiencies or performances of the batteries are not significantly reduced even in a long-term driving cycle.

[Experimental Example 2]

Charging and discharging was performed in the cell of Experimental Example 1 above using the electrolytes obtained in Examples 1 and 2 above, and a charge and discharge graph at the 100th cycle is shown in FIG. 2 below.
Referring to FIG. 2 below, when nitrogen gas is supplied to the reduction reactor to remove gases generated by side reactions, it can be confirmed that the charge/discharge life characteristics are improved.

Claims

1.    A method for preparing an electrolyte for a vanadium redox flow battery, the method comprising the steps of:

(a) preparing a first vanadium ion solution;
(b) flowing the first vanadium ion solution into a first cathode electrolyte tank and a first anode electrolyte tank to which a first stack containing a cathode, a separator, and an anode is connected;

(c) flowing the first vanadium ion solution from the first cathode electrolyte tank to the cathode and then oxidizing it to produce a second vanadium ion solution, and flowing the first vanadium ion solution from the first anode electrolyte tank to the anode and then reducing it to produce a third vanadium ion solution; and

(d) reacting the second vanadium ion solution generated at the cathode with a reducing agent to reduce it to a fourth vanadium ion solution.

2. The method of claim 1, further comprising a step (e) of flowing the fourth vanadium ion solution into a second cathode electrolyte tank and a second anode electrolyte tank to which a second stack including a cathode, a separator, and an anode are connected and reusing it.

3. The method of claim 2, wherein the reducing agent in the step (e) is inputted in an amount corresponding to the molar ratio thereof by measuring the concentration of pentavalent vanadium ions in the second vanadium ion solution.

4. The method of claim 1, wherein the reducing agent of the step (d) is one or more selected from the group consisting of oxalic acid, hydrazine monohydrate, ethanol, methanol, and formic acid.

5. The method of claim 1, wherein the reduction of the step (d) is performed until the concentration of the pentavalent vanadium ions in the second vanadium ion solution is 0.01 M or less.

6. The method of claim 1, wherein the reduction reaction of the step (d) further comprises a step of being performed in the presence of an inert gas.

7. The method of claim 5, wherein the inert gas is one or more selected from the group consisting of nitrogen, argon, and helium.

【FIG.1】

【FIG.2】

## INTERNATIONAL SEARCH REPORT

| | International application No. |
|---|---|
| | **PCT/KR2021/017901** |

| **A.** | **CLASSIFICATION OF SUBJECT MATTER** |
|---|---|
| | **H01M 8/18**(2006.01)i |

According to International Patent Classification (IPC) or to both national classification and IPC

| **B.** | **FIELDS SEARCHED** |
|---|---|

Minimum documentation searched (classification system followed by classification symbols)

H01M 8/18(2006.01); H01M 12/08(2006.01); H01M 4/36(2006.01); H01M 8/04(2006.01); H01M 8/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바나듐 이온 용액(vanadium ion solution), 전해액(electrolyte solution), 레독스 흐름 전지(redox flow battery), 산화(oxidation), 환원(reduction), 환원제(reducing agent), 재사용(reuse)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2014-0083027 A (IMERGY POWER SYSTEMS, INC.) 03 July 2014 (2014-07-03) | 1-5 |
| | See paragraphs [0016], [0043], [0048], [0050] and [0051]; and figures 1 and 3b. | |
| Y | | 6,7 |
| Y | KR 10-2020-0119773 A (KOREA ADVANCED INSTITUTE OF SCIENCE AND TECHNOLOGY) 20 October 2020 (2020-10-20) | 6,7 |
| | See paragraph [0055]; and figure 4. | |
| A | KR 10-1969625 B1 (UNITED TECHNOLOGIES CORP.) 16 April 2019 (2019-04-16) | 1-7 |
| | See entire document. | |
| A | KR 10-2011-0064058 A (KOREA INSTITUTE OF ENERGY RESEARCH) 15 June 2011 (2011-06-15) | 1-7 |
| | See entire document. | |
| A | KR 10-1506951 B1 (EM, Young Jun) 30 March 2015 (2015-03-30) | 1-7 |
| | See entire document. | |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2022** | **18 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/017901**

| Patent document cited in search report | | | Publication date (day/month/year) | Patent family member(s) | | | Publication date (day/month/year) |
|---|---|---|---|---|---|---|---|
| KR | 10-2014-0083027 | A | 03 July 2014 | AU | 2012-323979 | A1 | 08 May 2014 |
| | | | | BR | 112014009075 | A2 | 18 April 2017 |
| | | | | CN | 103975463 | A | 06 August 2014 |
| | | | | EP | 2801122 | A1 | 12 November 2014 |
| | | | | IN | 2817CHN2014 | A | 03 July 2015 |
| | | | | JP | 2014-532284 | A | 04 December 2014 |
| | | | | US | 2013-0095362 | A1 | 18 April 2013 |
| | | | | US | 2015-0050570 | A1 | 19 February 2015 |
| | | | | WO | 2013-056175 | A1 | 18 April 2013 |
| | | | | WO | 2016-069402 | A1 | 06 May 2016 |
| | | | | ZA | 201402826 | B | 25 November 2015 |
| KR | 10-2020-0119773 | A | 20 October 2020 | EP | 3761440 | A1 | 06 January 2021 |
| | | | | KR | 10-2019-0102532 | A | 04 September 2019 |
| | | | | KR | 10-2238667 | B1 | 12 April 2021 |
| | | | | US | 2020-0411894 | A1 | 31 December 2020 |
| | | | | WO | 2019-164356 | A1 | 29 August 2019 |
| KR | 10-1969625 | B1 | 16 April 2019 | CN | 105144455 | A | 09 December 2015 |
| | | | | EP | 2992567 | A1 | 09 March 2016 |
| | | | | JP | 2016-517160 | A | 09 June 2016 |
| | | | | JP | 6378319 | B2 | 22 August 2018 |
| | | | | KR | 10-2016-0008212 | A | 21 January 2016 |
| | | | | US | 2016-0056487 | A1 | 25 February 2016 |
| | | | | WO | 2014-178874 | A1 | 06 November 2014 |
| KR | 10-2011-0064058 | A | 15 June 2011 | KR | 10-1180770 | B1 | 07 September 2012 |
| KR | 10-1506951 | B1 | 30 March 2015 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101415538
- KR 101130575